# EUROPEAN PATENT APPLICATION

(11) **EP 4 030 392 A1**
(43) Date of publication of application: **20.07.2022**
(21) Application number: 21151879.0
(22) Date of filing: 15.01.2021
(51) Int. Cl.: G06T 19/00, G06F 3/048, G06T 11/20, G06T 17/00, G06F 3/01, G06T 7/50

(54) **CREATION OF 3D REFERENCE OUTLINES**

(71) Applicant: Siemens Aktiengesellschaft, 80333 München (DE)
(72) Inventor: Burgold, Mike, 81827 München (DE); Hutter, Andreas, 81673 München (DE); Sudharsan, Nischita, 82031 Grünwald (DE)

(57) **Abstract**

The disclosure relates to a method for creating a reference outline (3) of a first object (2),
the method comprising the steps:
- Obtaining (S1) a first representation of a first three-dimensional environment including the first object (2), wherein the first representation includes a depth information and a spatial information of the first three-dimensional environment,
- determining (S2) a multitude of reference points (4) by using results of analysing a first user (1) interaction and the first representation,
- determining (S3a) the reference outline (3) of the first object (2), wherein the reference outline (3) comprises at least one line,
wherein each of the at least one lines comprises at least one of the multitude of reference points (4), and
- storing (S4) the reference outline (3).

The disclosure further relates to a computer program product and a computer-readable storage medium.

## Description

### Field of the Invention

Embodiments herein generally relate to a method for creating a reference outline of a first object, wherein the first object is a real-world object. Further a related computer program product and a related computer-readable storage medium is claimed.

### Background of the Invention

In Augmented Reality (AR) and Virtual Reality (VR) many use cases and applications require overlaying 3D models on real world/virtual objects. For example, in quality control of machines such a 3D model can be used to highlight crucial points that need to be manually inspected by a technician.

One recurring problem when implementing such use cases and applications is, that often the 3D models are not available. In many cases they contain restricted information and are kept confidential, in some cases there are licensing issues and sometimes they are inexistent.

Photogrammetry is a method by which this problem has been solved up to now. Photogrammetry is used to create a 3D representation of an object, structure or space. There are many out there, both algorithmic and as software. The idea is to take a sequence of overlapping photographs of a physical object from different directions, orientations and poses. It can be done with a handheld camera or aerial cameras when large structures or spaces are involved. The software then registers the shared points between every image and calculates the distances between them in 3D space. The result is a point cloud that you can transform into a 3D mesh. For the problem described in section 1, the 3D mesh can be then be manipulated to extract just the outline. These existing methods often require a specialized set-up for scanning and a significant amount of computational resources demanding a different solution.

### Summary

Accordingly, there is a need for providing a method for determining 3D models of real-world objects.

Embodiments herein generally relate to a computer-implemented method for creating a reference outline of a first object, wherein the first object is a real-world object. Further a related computer program product, and a related computer-readable storage medium is claimed.

In one embodiment, the method comprising the steps:
- Obtaining a first representation of a first three-dimensional environment,
   wherein the first object is located within the first three-dimensional environment,
   wherein the first representation includes a depth information and a spatial information of the first three-dimensional environment,
- determining a multitude of reference points by using results of analysing a first user interaction and by using the first representation,
- determining the reference outline of the first object by analysing a second user interaction, wherein the reference outline comprises at least one line,
   wherein each of the at least one lines comprises at least one of the multitude of reference points, and
- storing (S4) the reference outline.

According to the embodiments instead of a full three-dimensional (3D) model, a reference outline models a real-world or a virtual-reality object. One advantage of reference outlines is that reference outlines can be created much more easily than full 3D models.

When analysing AR or VR use cases and applications in more detail it can be found that a full 3D model is not always necessary. Instead a reference outline, possibly with the addition of reference points, is enough.

Storing the reference outline can include a storage of the reference outline on a memory device or in a cloud storage system.

According to a further embodiment the method comprises the additional steps of:
- Loading a second representation of a second three-dimensional environment,
   wherein a second object is located within the second three-dimensional environment,
   wherein the second representation includes a depth information and a spatial information of the second three-dimensional environment, and
- augmenting the second object with the reference outline in the second three-dimensional environment.

The invention has the advantage over existing methods that different than the existing methods, it does not require a specialized set-up for scanning and a significant amount of computational resources demanding a different solution.

In the setting of this embodiment the first object can be an exemplary object in a lab environment from which the reference outline is initially created. The second object is a further object in a field environment, which is augmented by the reference outline.

A user interaction may allow a manual placement of the reference outline before augmenting. An automated analysis of the representation of the second object allows an automatic placement of the reference outline. A registration of the second representation including the second object and the reference outline my be performed by a method, matching corresponding points of the reference outline (e.g. reference points) to corresponding points of the second object (or also the first object). The registration can be performed manually or automatically without a user interaction.

According to a further embodiment the method comprises the additional step of:
- augmenting the first object with the reference outline in the first three-dimensional environment.

The advantage of this embodiment is that reference outline created based on the first object can be used to augment the first object. In this case an ad-hoc creation of reference outlines of formerly/previously unknow first objects is feasible.

According to a further embodiment the method comprises the additional steps of:
- determining augmentation information corresponding to the reference outline, wherein the augmentation information comprises a text, graphic, object, image, and/or a link to a document,
- determining coordinates of the augmentation within the first three-dimensional environment, and
- storing the augmentation information and the coordinates along with the reference outline.

Augmenting the second object and/or augmenting the first object with the reference outline according to the embodiments disclosed herein includes overlaying the second three-dimensional environment using the reference outline and/or using the reference outline and the augmentation information. This has the advantage that a text and/or a graphic can be displayed in an augmented reality environment next to the first object and/or the second object. The text and/or a graphic can be information regarding a machine status and the first object and/or the second object can be arranged as components of a production plant.

According to a further embodiment the first user interaction and/or the second user interaction includes one of the following in relation to the first object:
- a user selection, and/or
- a user gesture, and/or
- a user field of view, and/or,
- a user eye movement, and/or
- a user view direction.

The advantage of this embodiment is that the at least one reference point and/or the at least one line can be defined by analysing different input sources automatically.

According to a further embodiment the at least one line represents:
- a geometrical feature, and/or
- an edge, and/or
- a connection between corners, and/or
- a symmetry axis, and/or
- a motion axis
of the first object.

The advantage of this embodiment is that the at least one line represents a geometrical description of a geometrical feature of the first object.

According to a further embodiment the reference outline comprises at least one three-dimensional shape, wherein the at least one three-dimensional shape comprises:
- a cylinder, and/or
- a sphere, and/or
- a cuboid, and/or
- a cone, and/or
- a pyramid.

The advantage of this embodiment is that the three-dimensional shape is arranged to provide a representation of the first object and/or second object.

According to a further embodiment the second object and the first object are of similar geometry.

Of similar geometry means the geometry or shape of the objects is close to equal and/or that the both the second object and the first object might be of the same product category, especially the categories "chair", "door", "production engine", "car", "prosthetic arm", etc. The advantage of this embodiment is that reference outline created based on the first object can be used to augment the second object because the geometry is similar.

According to a further embodiment the first information includes a SLAM (Simultaneous Localization and Mapping) map.

According to a further embodiment for executing the method a technical device is used, the technical device being:
- a smartphone, and/or
- a tablet, and/or
- a device comprising an augmented reality software, and/or
- a device comprising a virtual reality software, and/or
- an augmented reality headset, and/or
- a head-mounted display, and/or
- a virtual reality headset, and/or
- a computer comprising an augmented reality software, and/or
- a computer comprising a virtual reality software.

The advantage of this embodiment is that the method can be integrated in different applications and technical devices.

According to a further embodiment the technical device is connected wirelessly to:
- a quality control device, and/or
- a technical maintenance device, and/or
- a technical inspection device, and/or
- a industrial plant, and/or
- a production plant, and/or
- a prosthetic arm, and/or
- a wind turbine, and/or
- a medical imaging device.

The advantage of this embodiment is that the method can be integrated in different applications and technical devices.

In general, the described method for creating reference outlines has the advantage to be quicker, more cost effective, easier to use and set up than state of the art solutions. Also, the produced reference outlines contain only the necessary data points and thus require less CPU/GPU load.

Compared to photogrammetry, the claimed methods for determining a 3D reference outline of an object is much more lightweight and quicker than photogrammetry. Photogrammetry relies on many images to be taken from multiple angles and poses in order to obtain a point cloud. This is already too much data which we will have to sift through to get the exact outline or the 3D model itself. The claimed methods produce exactly the data points which are needed and relevant. The photogrammetry software also require training to use and do not always provide accurate results. Another distinct advantage is that photogrammetry does not work well with shiny, reflective objects. The algorithm needs distinct anomalies on the object in order to clearly create distinct points in the cumulative point cloud.

User benefits of the claimed method are:
- User needs to only put on the HMD or use the AR device where the "reference points" app is already deployed and does not require any previous elaborate training to create 3D outlines of objects.
- Ease of setup - one-time deployment of app to any AR device which provides depth information and interaction via gaze or gestures (see figures).
- Creating accurate outlines with reference points saves time, effort, and costs.

Developer benefits:
- Reusability of app is high. Once deployed, it need not be programmed or trained separately for each object which needs an outline.
- No integration with neural networks or deep learning software is warranted.
- No sifting of huge data outputs such as a point cloud is required.
- Portability of app amongst Mixed reality (MR) devices is much easier.
- Programming on top of the app or integrating use cases with the claimed method can be conveniently done.
- When actual 3D models of an object are not present in the format which the developer wants (for example. jt, .fbx, .obj etc), it makes sense to quickly have the 3D outline as an intermediary solution in order to visualize the object.

Use cases which can benefit from the claimed method are:
- Repair tasks or quality checks: Field service technicians who need to perform repairs on machinery can overlay the 3D outline created from this app of the actual physical machine quickly and easily. The 3D (reference) outline can then highlight "points of interest" which can be the points to repair which makes the overall task much faster and accurate.
- Training: 3D outlines of various machines are created quickly with the claimed method. These "pseudo"-real-world objects can then be used to train on without much interference from the actual supervisors or trainers.
- Fault detection: The 3D outlines and "points of interest" provide also a way for the personnel working on machinery to annotate or mark certain areas which need further attention. These could be to indicate faults which need to be repaired, or conduct further analysis on these specific parts etc.
- Planning and configuration of production lines: If a production planner needs to configure a shop floor and fit in a new production line, these 3D outlines are of high use especially when the detailed digital twins of the actual production equipment is not available. Since the 3D outlines consist of depth information and are enough to indicate the size of the equipment, the planner need not wait for detailed 3D models for initial analysis. This saves precious time for the initial iterations of (re) configurations.

Further a related computer program product comprising instructions which, when the program is executed by the computational device, cause the computational device to carry out the steps of the claimed method is claimed.

Further a computer-readable storage medium comprising instructions which, when executed by the computational device, cause the computational device to carry out the steps of the claimed method is claimed.

It is to be understood that the elements and features recited in the appended claims may be combined in different ways to produce new claims that likewise fall within the scope of the present invention. Thus, whereby the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

### Brief Description of the Drawings

- Fig. 1: shows a flow diagram of the method for creating a reference outline of a first object,
- Fig. 2 - Fig. 5: show a first application of the claimed method, with:

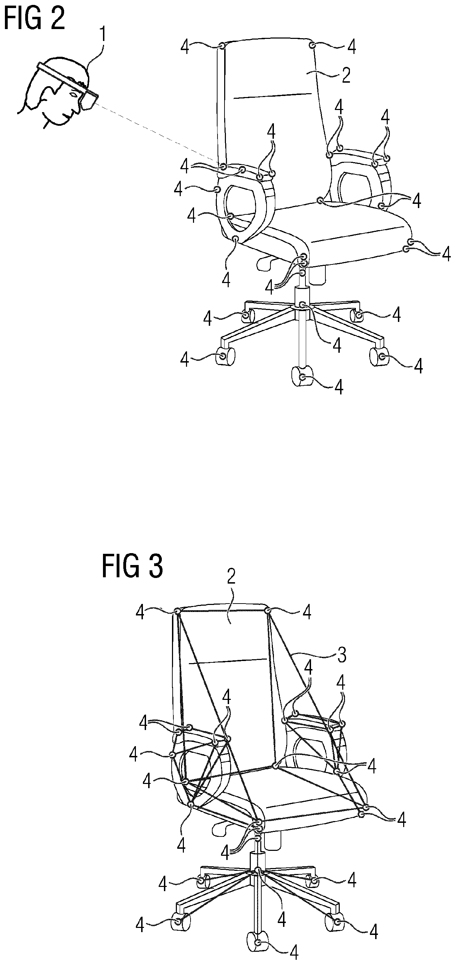

- Fig. 2: showing a first user interaction for determining a multitude of reference points,
- Fig. 3: showing a reference outline on a first object,

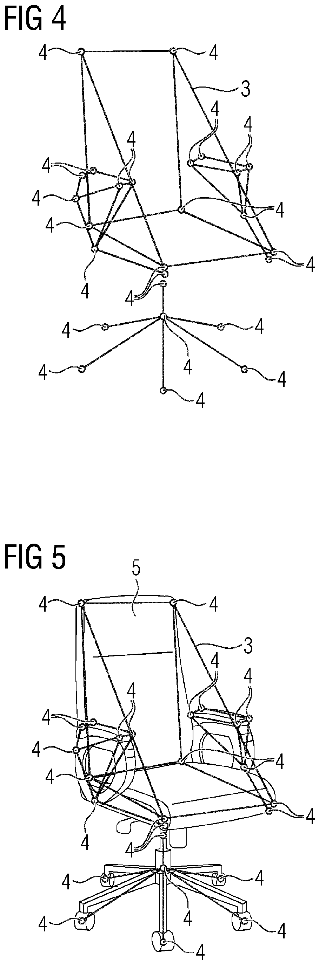

- Fig. 4: showing a reference outline, and
- Fig. 5: showing an augmented second object with a reference outline, and

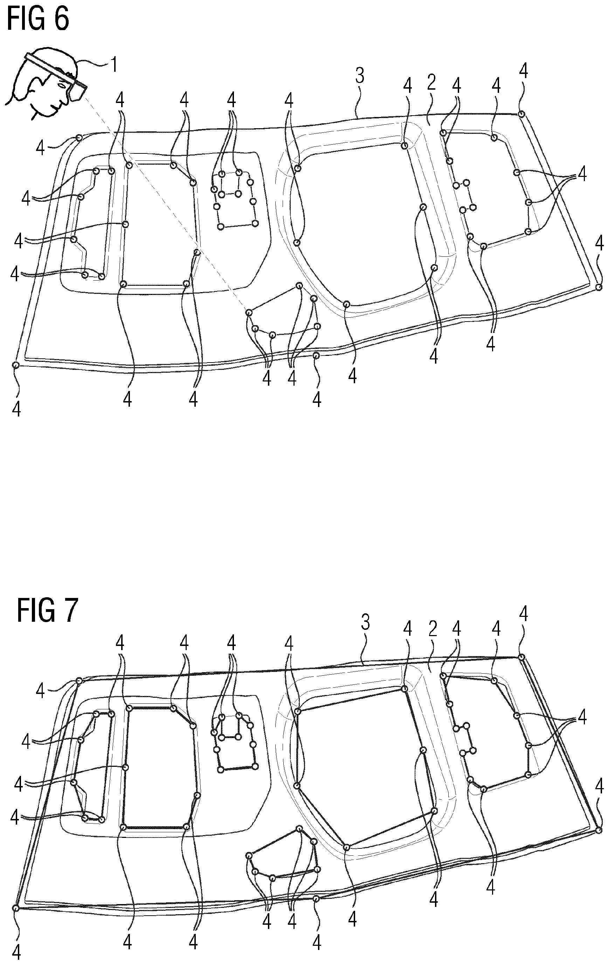

- Fig. 6 - Fig. 9: show a second application of the claimed method, with:
- Fig. 6: showing a first user interaction for determining a multitude of reference points,
- Fig. 7: showing a reference outline on a first object,

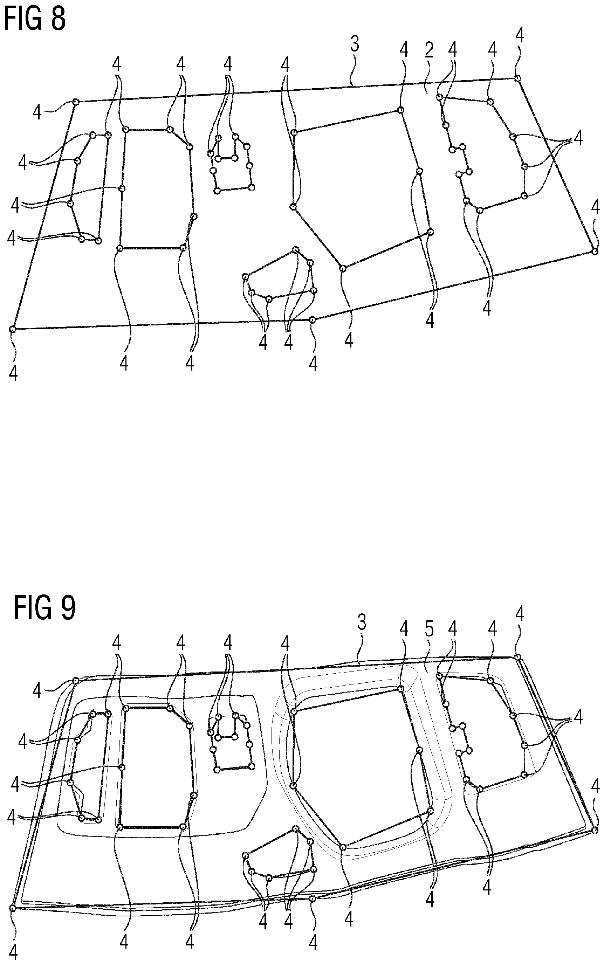

- Fig. 8: showing a reference outline, and
- Fig. 9: showing an augmented second object with a reference outline.

### Detailed Description of the Drawings

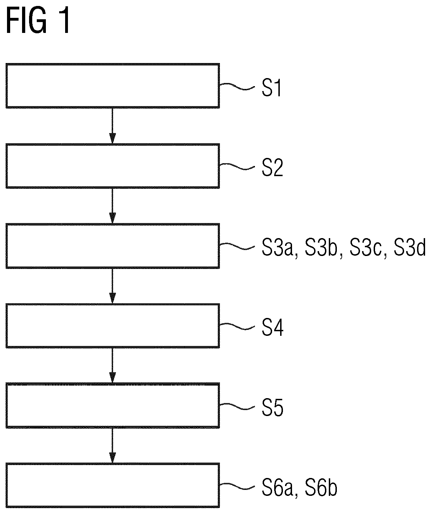

Fig. 1 shows a flow diagram of the method for creating a reference outline 3 of a first object 2, wherein the first object 2 is a real-world object.

The method comprising the steps:
- Step S1: Obtaining a first representation of a first three-dimensional environment,
   wherein the first object 2 is located within the first three-dimensional environment,
   wherein the first representation includes a depth information and a spatial information of the first three-dimensional environment,
- Step S2: Determining a multitude of reference points 4 by using results of analysing a first user 1 interaction and by using the first representation,
- Step S3a: Determining the reference outline 3 of the first object 2 by analysing a second user 1 interaction, wherein the reference outline 3 comprises at least one line,
   wherein each of the at least one lines comprises at least one of the multitude of reference points 4,
- Step S3b: Determining augmentation information corresponding to the reference outline 3, wherein the augmentation information comprises a text, graphic, object, image, and/or a link to a document,
- Step S3c: Determining coordinates of the augmentation within the first three-dimensional environment,
- Step S3d: Storing the augmentation information and the coordinates along with the reference outline 3,
- Step S4: Storing the reference outline 3.
- Step S5: Loading a second representation of a second three-dimensional environment,
   wherein a second object 5 is located within the second three-dimensional environment,
   wherein the second representation includes a depth information and a spatial information of the second three-dimensional environment, and
- Step S6a: Augmenting the second object 5 with the reference outline 3 in the second three-dimensional environment
   and/or
- Step S6b: Augmenting the first object 2 with the reference outline 3 in the first three-dimensional environment.

Fig. 2 to Fig. 5 show a first application of the claimed method.

An advantageous technique for creating a reference outline 3 of a first object 2 shown in Fig. 2 to Fig. 9 is "Interactive Reference Outlining".

Two features are obligatory to perform "Interactive Reference Outlining": "Spatial Mapping" and "Gaze".

"Spatial Mapping" is a SLAM (simultaneous localization and mapping) process for scanning of the environment around a user 1 in order to get a detailed representation of the first three-dimensional environment and/or the second three-dimensional environment, especially real-world spaces around the user 1. This helps anchor holograms, especially augmentation information, especially text, graphics, and/or labels or first objects 2 in the user's world and takes advantage of real-world depth cues/depth information.

"Gaze" enables a head-mounted augmented or virtual device (HMD) worn by a user 1 to know where the user 1 is currently looking at. The point the user 1 is looking at can be represented by a dot called a "cursor" in the user's 1 field of view. "Gaze" can be used to define reference points or lines.

With both these features "Spatial Mapping" and "Gaze", all the user 1 must do is place a set of reference points 4 on a first object 2 by just looking at them. Placing is done by the user 1 selecting, especially a tap gesture, a point on the first object 2 in the augmented reality (AR) space by allowing the cursor to interact with the first object 2. This is made possible by the feature "Spatial Mapping". The user 1 must then repeat the selection of reference points 4 which is done quickly and easily just by looking locations, advantageously at edges and/or corners of the first object 2.

The user 1 must walk around and make use of the depth information which is continuously provided by the "Spatial Mapping" feature. This anyway happens in the background. The user 1 can then specify which reference points 4 he wants to connect and create a "Connection".

"Connection" here means drawing a line between reference points 4 so that it looks like an outline of an edge. The reference points 4 are connected corresponding to each edge of the first object 2 and the final output will be the combination of all these edges/connections to give the overall reference outline 3 of the first object 2 in 3D space. The advantage of this proposal is that the reference points 4 can be placed quickly and easily to define the user's 1 choice of creating a reference outline 3 from the first object 2.

Fig. 2 shows a first user 1 interaction for determining a multitude of reference points 4. A user 1 is looking at and adding reference points 4 to a first object 2 (chair).

Fig. 3 shows a reference outline 3 on a first object 2. The reference outline 3 was created by connecting reference points 4. The reference outlines 3 is positioned onto, especially is overlying the first object 2.

Fig. 4 shows a reference outline 3 comprising reference points 4 without the first object 2 shown in Fig. 2 and Fig. 3.

Fig. 5 shows an augmented second object with a reference outline. The second object 5 is overlaid/augmented by the reference outline 3 comprising reference points 4.

Fig. 6 - Fig. 9 show a second application of the claimed method.

Fig. 6 shows a first user 1 interaction for determining a multitude of reference points 4. A user 1 is looking at and adding reference points 4 to a first object 2 (door of a car or vehicle).

Fig. 7 shows a reference outline 3 on a first object 2. The reference outline 3 was created by connecting reference points 4. The reference outlines 3 is positioned onto, especially is overlying the first object 2.

Fig. 8 shows a reference outline 3 comprising reference points 4 without the first object 2 shown in Fig. 6 and Fig. 7.

Fig. 9 shows an augmented second object with a reference outline. The second object 5 is overlaid/augmented by the reference outline 3 comprising reference points 4.

The technique "Interactive Reference Outlining" works with any device which can provide both AR depth information and has gaze (or point) and drawing capabilities. This way also devices like AR enabled smart phones and tablet can be used (e.g. an iPhone with ARKit, e.g. an example for placing reference points can be the AR ruler app or a Microsoft HoloLens device) .

When a reference outline 3 is created as described above, it typically, is used in an AR view in such a way that it overlays the second object 5. Possible methods to overlay the second object 1 with the reference outline 3 include:
- Manual placement: The user 1 selects a point in 3D space close to the second object 5 using gaze and then uses gestures to move, rotate and resize the reference outline 3 until it overlays the second object 5 fully.
- Semi-manual placement with marker support: a single identifying marker is put on the second object 5. The marker is automatically recognized using image processing and the reference outline 3 is placed on to the marker's location. After this automatic step, the user 1 applies gestures to move, rotate and resize the reference outline 3, until it overlays the second object 5 fully.
- Marker based placement: When "Marker-based Reference Outlining" is applied, the markers used for generating the reference outline 3 are left on the first object 2 and the HoloLens recognizes the markers. Then 3D object detection can be used to compute the overlay of the reference outline 3 on the first object 2 automatically.
- Automatic registration of the reference outline 3 with the second object 5 or the first object 2 by automatic edge detection.

Although the invention has been explained in relation to its advantageous embodiments as mentioned above, it is to be understood that many other possible modifications and variations can be made without departing from the scope of the present invention. It is, therefore, contemplated that the appended claim or claims will cover such modifications and variations that fall within the true scope of the invention.

### List of Reference Signs

- 1: user
- 2: first object
- 3: reference outline
- 4: reference point
- 5: second object
- Si: Step i

## Claims

1. Computer-implemented method for creating a reference outline (3) of a first object (2), wherein the first object (2) is a real-world object,
the method comprising the steps:
- Obtaining (S1) a first representation of a first three-dimensional environment,
wherein the first object (2) is located within the first three-dimensional environment,
wherein the first representation includes a depth information and a spatial information of the first three-dimensional environment,
- determining (S2) a multitude of reference points (4) by using results of analysing a first user (1) interaction and by using the first representation,
- determining (S3a) the reference outline (3) of the first object (2) by analysing a second user (1) interaction, wherein the reference outline (3) comprises at least one line, wherein each of the at least one lines comprises at least one of the multitude of reference points (4), and
- storing (S4) the reference outline (3).

2. Method according to claim 1,
comprising the additional steps of:
- Loading (S5) a second representation of a second three-dimensional environment,
wherein a second object (5) is located within the second three-dimensional environment,
wherein the second representation includes a depth information and a spatial information of the second three-dimensional environment, and
- augmenting (S6a) the second object (5) with the reference outline (3) in the second three-dimensional environment.

3. Method according to claim 1,
comprising the additional step of:
- augmenting (S6b) the first object (2) with the reference outline (3) in the first three-dimensional environment.

4. Method according to one of the previous claims, comprising the additional steps of:
- determining (S3b) augmentation information corresponding to the reference outline (3), wherein the augmentation information comprises a text, graphic, object, image, and/or a link to a document,
- determining (S3c) coordinates of the augmentation within the first three-dimensional environment, and
- storing (S3d) the augmentation information and the coordinates along with the reference outline(3).

5. Method according to one of the previous claims,
wherein the first user (1) interaction and/or the second user (1) interaction includes one of the following in relation to the first object (2):
- a user (1) selection, and/or
- a user (1) gesture, and/or
- a user (1) field of view, and/or,
- a user (1) eye movement, and/or
- a user (1) view direction.

6. Method according to one of the previous claims,
wherein the at least one line represents:
- a geometrical feature, and/or
- an edge, and/or
- a connection between corners, and/or
- a symmetry axis, and/or
- a motion axis
of the first object (2).

7. Method according to one of the previous claims,
wherein the reference outline (3) comprises at least one three-dimensional shape,
wherein the at least one three-dimensional shape comprises:
- a cylinder, and/or
- a sphere, and/or
- a cuboid, and/or
- a cone, and/or
- a pyramid.

8. Method according to one of the previous claims,
wherein the second object (5) and the first object (2) are of similar geometry.

9. Method according to one of the previous claims,
wherein the first information includes a SLAM (Simultaneous Localization and Mapping) map.

10. Method according to one of the previous claims,
wherein for executing the method a technical device is used, the technical device being:
- a smartphone, and/or
- a tablet, and/or
- a device comprising an augmented reality software, and/or
- a device comprising a virtual reality software, and/or
- an augmented reality headset, and/or
- a head-mounted display, and/or
- a virtual reality headset, and/or
- a computer comprising an augmented reality software, and/or
- a computer comprising a virtual reality software.

11. Method according to claim 10,
wherein the technical device is connected wirelessly to:
- a quality control device, and/or
- a technical maintenance device, and/or
- a technical inspection device, and/or
- a industrial plant, and/or
- a production plant, and/or
- a prosthetic arm, and/or
- a wind turbine, and/or
- a medical imaging device.

12. A computer program product comprising instructions which, when the program is executed by the computational device, cause the computational device to carry out the steps of the method according to one of the claims 1 to 11.

13. A computer-readable storage medium comprising instructions which, when executed by the computational device, cause the computational device to carry out the steps of the method according to one of the claims 1 to 11.
